# FASCICULE DE BREVET EUROPEEN

(11) **EP 0 580 496 B1**
(45) Date de publication et mention de la délivrance du brevet: **07.05.1997**
(21) Numéro de dépôt: 93401866.4
(22) Date de dépôt: 20.07.1993
(51) Int. Cl.: B60Q 1/068

(54) **Dispositif de réglage de l'orientation d'une partie mobile d'un projecteur de véhicule, et procédé de montage du dispositif**
Steuerungseinrichtung der Neigung eines verstellbaren Teils eines Scheinwerfers und Befestigungsvorrichtung
Control device of the orientation of a movable part of a headlight and mounting thereof

(30) Priorité: 21.07.1992 FR 9208989
(43) Date de publication de la demande: 26.01.1994
(73) Titulaire: VALEO VISION, 93000 Bobigny (FR)
(72) Inventeur: Salmon, Jean, B-7800 Ath (BE); Loiselet, Jean-Pierre, B-7804 Rebaix (Ath) (BE); Demarcq, Vincent, F-59770 Marly (FR)
(74) Mandataire: Schrimpf, Robert

(56) Documents cités:
- EP-A- 0 393 353
- DE-C- 3 425 646
- US-A- 4 870 544

## Description

La présente invention concerne un dispositif de réglage d'une partie mobile d'un projecteur de véhicule automobile, notamment d'un réflecteur, du type comportant une vis actionnable en rotation, en prise, d'une part, avec une partie fixe du projecteur qui est solidaire de la carrosserie du véhicule et, d'autre part, avec la partie mobile en vue de modifier son orientation, lors d'une action rotative sur ladite vis.

Il est habituellement prévu de procéder au montage d'un tel dispositif en prévoyant des aménagements appropriés sur lesdites parties fixe et mobile du projecteur lors de leur fabrication, ces aménagements coopérant avec une vis montée ultérieurement, pour compléter le dispositif.

On comprend bien qu'un tel procédé est pénalisant à plusieurs égards.

En effet, le fait de concevoir initialement des parties de projecteur spécifiques comprenant les aménagements respectifs, fait obstacle à toute standardisation de ces derniers. Cela complique grandement la fabrication du projecteur dans son ensemble.

De plus, une telle conception traditionnelle du dispositif, implique un certain nombre d'opérations manuelles qu'il est difficile d'automatiser, notamment en ce qui concerne la mise en place de la vis de réglage entre les éléments à relier.

Les documents US-A-4 870 544 et EP-A-0 393 353 enseignent des dispositifs de réglage qui, bien que leur montage sur un projecteur soit en partie simplifié, n'autorisent pas non plus une automatisation du montage. Plus précisément, US-A-4,870,544 décrit un dispositif de réglage selon le préambule de la revendication 1.

La présente invention a pour but de remédier aux inconvénients précités, en rendant le montage d'un dispositif de réglage extrêmement simple, avec possibilité d'automatisation.

Elle concerne à cet effet, selon un premier aspect, un dispositif de réglage d'une partie mobile, notamment d'un réflecteur, d'un projecteur de véhicule automobile par rapport à une partie fixe, notamment une pièce intermédiaire du projecteur, tel que défini dans la revendication 1.

Selon un deuxième aspect, il est proposé un projecteur de véhicule automobile, du type comprenant une partie mobile telle qu'un réflecteur pouvant être réglée en orientation par rapport à une partie fixe telle qu'une pièce intermédiaire entre le réflecteur et une glace, caractérisé en ce qu'il comprend entre la partie mobile et la partie fixe au moins un dispositif de réglage, tel que défini dans la revendication 1.

Enfin, l'invention concerne également un procédé de montage d'un dispositif de réglage, selon la revendication 1, sur un projecteur comprenant une partie mobile telle qu'un réflecteur pouvant être réglée en orientation par rapport à une partie fixe telle qu'une pièce intermédiaire entre le réflecteur et une glace, caractérisé par les étapes exposées dans la revendication 10.

Des aspects préférés, mais non limitatifs, de l'invention, sont définis dans les revendications dépendantes.

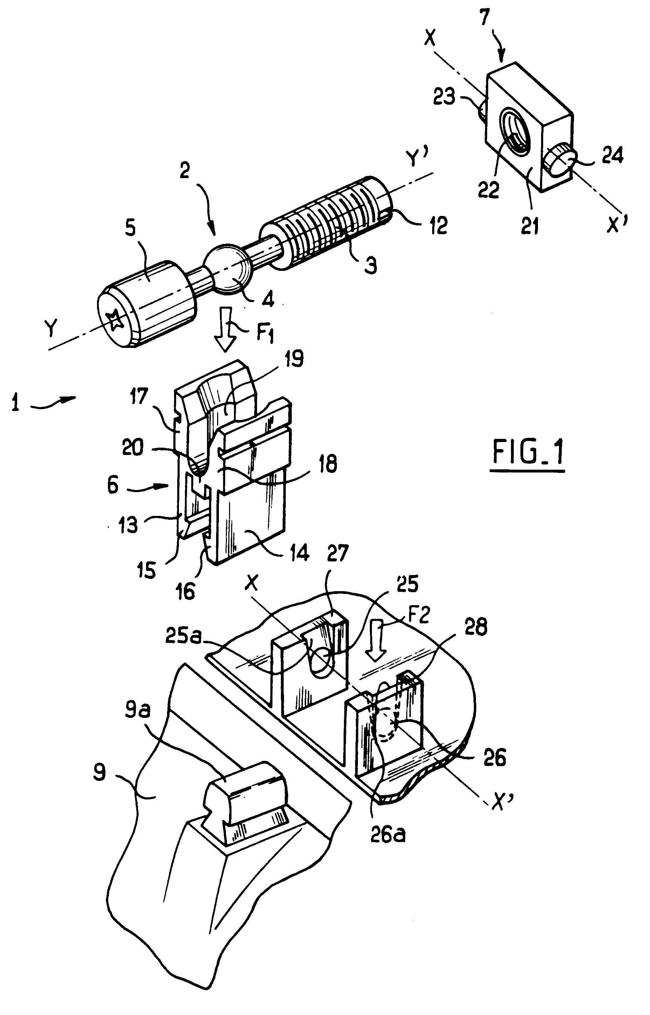

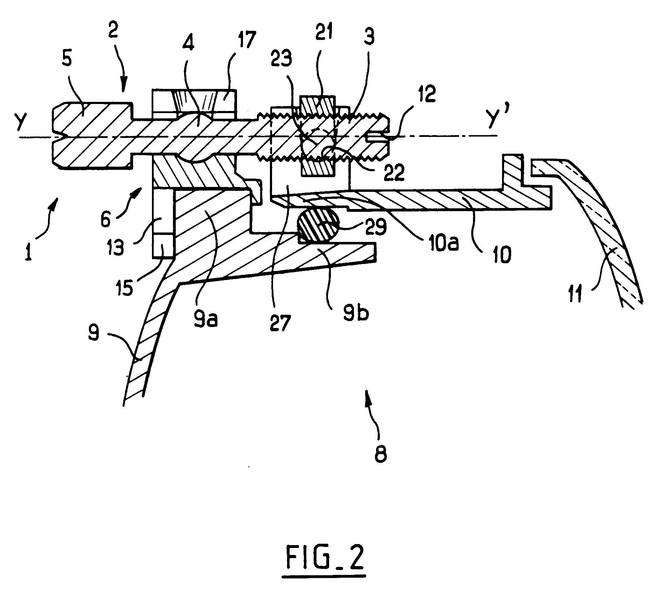

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut être réalisée et dans lesquels :
. la figure 1 représente en perspective éclatée un dispositif de montage réglable de réflecteur, et
. la figure 2 est une vue en coupe verticale axiale du dispositif de la figure 1, après montage.

Le dispositif de montage réglable désigné dans son ensemble par 1 comporte une vis de réglage 2 qui comprend une partie terminale filetée 3 et une rotule 4 réalisée dans une partie intermédiaire.

La vis 2 comporte en outre deux organes de manoeuvre disposés à chacune de ses extrémités libres, qui sont constitués, d'une part, par un bouton 5 destiné à une action manuelle et, d'autre part, par une fente 12 destinée à l'introduction d'un outil tel un tournevis. Ainsi, la vis 2 sera actionnable en rotation, ultérieurement, indifféremment d'un côté ou de l'autre, selon sa disposition dans le véhicule.

La vis de réglage 2 est destinée à venir en prise avec deux éléments de montage distincts dont l'un, désigné dans son ensemble par 6, est destiné à coopérer avec une partie mobile du projecteur, en l'occurrence un réflecteur 9, l'autre indiqué en 7 étant destiné à coopérer avec une partie fixe 10 du même projecteur.

Selon le présent exemple, la partie fixe 10 est constituée par une pièce intermédiaire solidaire de la carrosserie du véhicule et interposée entre une glace de diffusion 11 du projecteur et le réflecteur réglable 9, la glace 11 étant solidaire de la pièce intermédiaire 10.

L'élément de montage 6 destiné à coopérer avec le réflecteur mobile 9 est constitué, d'une part, par une partie inférieure définissant deux pattes parallèles 13 et 14 destinées à l'ancrage sur une partie correspondante 9a de fixation du réflecteur 9, sur lequel il est retenu par des ergots 15 et 16 réalisés en vis-à-vis aux extrémités desdites pattes élastiques 13 et 14, et, d'autre part, par une partie supérieure formée par deux ailes 17 et 18 définissant entre elles un siège en partie sphérique 19 et déformables élastiquement pour l'engagement de la rotule 4 prévue sur la vis de réglage 2, lesdites parties inférieure et supérieure étant reliées entre elles par une partie centrale de liaison 20.

Ledit élément de montage 6 est avantageusement obtenu au cours d'une opération unique de moulage de matière plastique.

Par ailleurs, l'élément de montage 7 destiné à coopérer avec la partie fixe 10 du projecteur est constitué par un organe 21, comportant centralement un trou taraudé 22 pour la partie filetée de la vis et comportant deux tétons latéraux cylindriques 23 et 24, aptes à s'encliqueter dans des logements correspondants 25 et 26 ménagés, selon un axe X-X' perpendiculaire à celui Y-Y' de la vis 2, respectivement sur des faces en vis-à-vis de deux pattes parallèles 27 et 28 faisant saillie vers le haut à partir de la partie fixe 10 du projecteur. En association avec les logements 25, 26 sont prévues deux rampes 25a, 26a s'étendant essentiellement verticalement entre lesdits logements et les bords libres supérieurs des pattes 27, 28. Ces rampes permettent, en guidant les tétons 23, 24 jusque dans les logements associés, avec déformation élastique temporaire des pattes 27, 28, la mise en place de l'organe 21 selon une direction essentiellement verticale.

L'élément 7 forme ainsi un écrou articulé sur les pattes 27, 28 à l'aide des tétons 23, 24.

Pour assurer l'étanchéité de l'espace intérieur du projecteur, un joint 29 compressible élastiquement, est disposé entre une partie d'extrémité périphérique 9b du réflecteur 9 et une partie correspondante 10a de la pièce intermédiaire 10 la recouvrant.

Un procédé de montage du réflecteur et de la pièce intermédiaire à l'aide des éléments 2, 6 et 7 peut être le suivant :
- engagement de la vis de réglage 2 sur l'élément 6 par l'intermédiaire de la rotule 4 introduite dans le siège 19 défini entre les ailes 17 et 18 avec déformation élastique temporaire de ces dernières, suivant un sens d'introduction F1 ;
- vissage de l'élément 7 formant écrou sur la partie filetée 3 de la vis 2 ;
- les éléments 6, 7 ainsi pré-assemblés par l'intermédiaire de la vis de réglage 2, sont encliquetés verticalement sur la partie 9a du réflecteur 9 et sur la partie 10a de l'élément intermédiaire 10, respectivement.

En particulier, l'élément 7 formant écrou est assemblé entre les montants 27 et 28 en engageant les tétons 23, 24 dans les logements 25, 26 via les rampes 25a, 26a, selon la flèche F2, avec déformation élastique temporaire desdits montants. L'élément 6 peut être fixé sur la partie 9a du réflecteur 9 au cours du même mouvement vertical (F1), à partir du dessus, avec écartement élastique temporaire des pattes 13, 14.

Dans le présent exemple, pour assurer un blocage efficace, suivant l'axe Y-Y', de l'élément 6 par rapport au réflecteur 9, on prévoit avantageusement comme le montre la figure 2 qu'une patte 17 vienne s'engager contre la face de la partie 9a tournée vers l'élément intermédiaire 10.

Tout autre aménagement équivalent peut bien entendu être prévu.

Bien entendu, toute autre procédure de montage permise par le caractère modulaire du dispositif de réglage peut être envisagée.

Pour permettre le réglage du faisceau en site et en azimut, un projecteur est de préférence équipé de deux dispositifs de réglage clipsables selon l'invention, et d'une liaison pivotante, non réglable par glissières courbes, rotule ou analogue.

Le fonctionnement d'un tel dispositif ainsi monté sur le projecteur est le suivant.

Lors d'une rotation de la vis 2 dans un sens ou dans l'autre, on provoque le basculement angulaire relatif du réflecteur 9.

Un tel basculement est rendu possible sans contrainte mécanique grâce, d'une part, au fait que la rotule 4 permet le pivotement relatif de la vis 2 par rapport au réflecteur 9 via la pièce 6 et, d'autre part, grâce à l'articulation de l'écrou 7 (qui suit angulairement la vis 2 en cours de réglage) par rapport à l'élément intermédiaire, via les tétons 25, 26 et les pattes 27, 28.

On notera pour terminer que la vis 2 par sa configuration avec une rotule intermédiaire 4 et deux organes de manoeuvre 5, 12 situés de part et d'autre de cette rotule permet d'effectuer le réglage d'orientation indifféremment par l'avant ou par l'arrière du projecteur. Bien entendu, une telle vis pourra être utilisée avec avantage dans des dispositifs de réglage de types différents de celui de la présente invention.

## Revendications

1. Dispositif de réglage d'une partie mobile, notamment d'un réflecteur (9), d'un projecteur de véhicule automobile par rapport à une partie fixe, notamment une pièce intermédiaire (10) du projecteur, du type comprenant une vis (2) comportant une rotule (4) engagée dans un siège (19) relié à l'une des parties (9) et un filetage (3) en prise avec un taraudage (22) relié à l'autre partie (10), le siège de rotule (19) et le taraudage (22) étant prévus respectivement sur deux éléments (6 ; 7), et le siège de rotule (19) comportant des moyens de montage (13 ; 14) par simple mouvement relatif sur des premiers moyens de montage (9a) prévus sur la première partie (9), caractérisé en ce que le taraudage (22) comporte des moyens de montage (23 ; 24) par simple mouvement relatif sur des seconds moyens de montage (25 ; 26) prévus sur ladite autre partie (10).

2. Dispositif selon la revendication 1, caractérisé en ce que les moyens de montage (13, 14 ; 23, 24 ; 9a ; 25, 26) opèrent par un mouvement relatif des éléments selon une direction essentiellement perpendiculaire à un axe (Y-Y') de la vis (2).

3. Dispositif selon l'une des revendications 1 et 2, caractérisé en ce que la rotule (4) est prévue dans une région intermédiaire de la vis (2) située entre un bouton de manoeuvre (5) et le filetage (3) et en ce que le siège de rotule (19) est défini entre deux branches (17, 18) de l'élément associé (6), définissant un passage pour la vis.

4. Dispositif selon la revendication 3, caractérisé en ce que la vis comporte, à une extrémité opposée au bouton de manoeuvre (5), un autre moyen de manoeuvre (12).

5. Dispositif selon la revendication 3 ou 4, caractérisé en ce que l'élément (6) définissant le siège de rotule comporte en outre des moyens à pattes d'ancrage (13, 14, 17) sur une zone spécialement conformée (9a) de la partie associée (9).

6. Dispositif selon l'une des revendications 1 à 5, caractérisé en ce que le taraudage (22) est prévu dans un élément (7) auquel les moyens de montage (23, 24, 25, 26) confèrent un degré de liberté en pivotement autour d'un axe (X-X') essentiellement perpendiculaire à l'axe de la vis (2).

7. Dispositif selon la revendication 6, caractérisé en ce que l'élément (7) dans lequel est prévu le taraudage (22) comporte deux tétons (23, 24) aptes à être engagés dans des logements complémentaires (25, 26), prévus dans deux faces en vis-à-vis (27, 28) de la partie associée (10), via deux rampes (25a, 26a) s'étendant, après montage, essentiellement perpendiculairement à l'axe (Y-Y') de la vis (2).

8. Projecteur de véhicule automobile, du type comprenant une partie mobile telle qu'un réflecteur (9) pouvant être réglée en orientation par rapport à une partie fixe (10) telle qu'une pièce intermédiaire entre le réflecteur et une glace (11), caractérisé en ce qu'il comprend entre la partie mobile et la partie fixe au moins un dispositif de réglage selon l'une des revendications précédentes.

9. Projecteur selon la revendication 8, caractérisé en ce que le ou chaque élément (6) comportant un siège (19) pour rotule (4) de vis est monté sur la partie mobile (9) et en ce que le ou chaque élément (7) comportant un taraudage (22) pour filetage (3) de vis est monté sur la partie fixe (10).

10. Procédé de montage d'un dispositif de réglage selon l'une des revendications 1 à 7 sur un projecteur comportant une partie mobile telle qu'un réflecteur (9) pouvant être réglée en orientation par rapport à une partie fixe (10) telle qu'une pièce intermédiaire entre le réflecteur et une glace (11), caractérisé en ce qu'il comprend les étapes suivantes :
(a) positionnement de la partie mobile (9) et de la partie fixe (10) dans une relation mutuelle prédéterminée,
(b) pré-assemblage de la vis (2) avec chacun des deux éléments (6, 7),
(c) montage de l'un des éléments (7) sur la partie associée (10) du projecteur, et
(d) montage de l'autre élément (6) sur l'autre partie (9) du projecteur.

11. Procédé selon la revendication 10, caractérisé en ce que les étapes (c) et (d) sont simultanées.

12. Procédé selon la revendication 11, caractérisé en ce que les étapes (c) et (d) s'effectuent par un mouvement de la vis (2) et des deux éléments pré-assemblés (6, 7) selon une direction essentiellement perpendiculaire à un axe (Y-Y') de la vis (2).

## Claims

1. An adjustment device for adjusting a moving portion of a motor vehicle headlight relative to a fixed portion, in particular a reflector (9) relative to an intermediate portion (10) of the headlight, the device being of the type comprising a screw (2) that includes a ball member (4) received in a seat (19) connected to one of the portions (9) and a thread (3) engaging in tapping (22) connected to the other portion (10), the ball seat (19) and the tapping (22) being respectively provided on two elements (6, 7), and the ball seat (19) including assembly means (13, 14) enabling it to be assembled to first assembly means (9a) provided on the first portion (9) merely by relative displacement, the device being characterized in that the tapping (22) includes assembly means (23, 24) enabling it to be assembled to second assembly means (25; 26) provided on said other portion (10) merely by relative displacement.

2. A device according to claim 1, characterized in that the assembly means (13, 14; 23, 24; 9a; 25, 26) operate by the elements moving relative to one another in a direction essentially perpendicular to an axis (Y-Y') of the screw (2).

3. A device according to claim 1 or 2, characterized in that the ball member (4) is provided in an intermediate region of the screw (2) situated between a drive knob (5) and the thread (3), and in that the ball seat (19) is defined between two branches (17, 18) of the associated elements (6), which branches define a passage for the screw.

4. A device according to claim 3, characterized in that the screw includes other drive means (12) at an end opposite from its drive knob (5).

5. A device according to claim 3 or 4, characterized in that the element (6) defining the ball seat further includes fastening tab means (13, 14) for fastening to a specially shaped zone (9a) of the associated portion (9).

6. A device according to any one of claims 1 to 5, characterized in that the tapping (22) is provided in an element (7) to which the assembly means (23, 24, 25, 26) impart a degree of freedom in pivoting about an axis (X-X') that is essentially perpendicular to the axis of the screw (2).

7. A device according to claim 6, characterized in that the element (7) in which the tapping is provided (22) includes two studs (23, 24) suitable for being engaged in complementary housings (25, 26) provided in two facing faces (27, 28) of the associated portion (10) via two ramps (25a, 26a), the studs extending essentially perpendicular to the axis (Y-Y') of the screw after assembly (2).

8. A motor vehicle headlight of the type comprising a moving portion such as a reflector (9) capable of being adjusted in orientation relative to a fixed portion (10) such as an intermediate part between the reflector and a glass (11), the headlight being characterized in that between the moving portion and the fixed portion the headlight includes at least one adjustment device according to any preceding claim.

9. A headlight according to claim 8, characterized in that the, or each, element (6) including a seat (19) for a ball (4) of a screw is mounted on the moving portion (9) and in that the, or each, element (7) including tapping (22) for the thread (3) of the screw is mounted on the fixed portion (10).

10. A method of assembling an adjustment device according to any one of claims 1 to 7 on a headlight that includes a moving portion such as a reflector (9) capable of being adjusted in orientation relative to a fixed portion (10) such as an intermediate part between the reflector and a glass (11), the method being characterized in that it comprises the following steps:
(a) positioning the moving portion (9) and the fixed portion (10) in a predetermined mutual relationship;
(b) pre-assembling the screw (2) with each of the two elements (6, 7) of the adjustment device;
(c) mounting one of the elements (7) on the associated portion (10) of the headlight; and
(d) mounting the other element (6) on the other portion (9) of the headlight.

11. A method according to claim 10, characterized in that steps (c) and (d) are simultaneous.

12. A method according to claim 11, characterized in that steps (c) and (d) are performed by moving the screw (2) and the two pre-assembled elements (6, 7) along a direction that is substantially perpendicular to an axis (Y-Y') of the screw (2).

## Patentansprüche

1. Vorrichtung zur Einstellung eines beweglichen Teils, insbesondere eines Reflektors (9), eines Kraftfahrzeugscheinwerfers im Verhältnis zu einem ortsfesten Teil, insbesondere einem Zwischenstück (10) des Scheinwerfers, in der Ausführung mit einer Schraube (2), die ein Kugelgelenk (4), das in einen Sitz (19) eingesetzt ist, der mit einem der Teile (9) verbunden ist, und ein Außengewinde (3) umfaßt, das sich mit einem Innengewinde (22) in Eingriff befindet, das mit dem anderen Teil (10) verbunden ist, wobei der Kugelgelenksitz (19) und das Innengewinde (22) jeweils an einem von zwei Elementen (6; 7) vorgesehen sind und wobei der Kugelgelenksitz (19) Montagemittel (13; 14) für die durch eine einfache relative Bewegung erfolgende Anbringung an ersten Montagemitteln (9a) umfaßt, die am ersten Teil (9) vorgesehen sind , **dadurch gekennzeichnet,** daß das Innengewinde (22) Montagemittel (23; 24) für die durch eine einfache relative Bewegung erfolgende Anbringung an zweiten Montagemitteln (25; 26) umfaßt, die an dem besagten anderen Teil (10) vorgesehen sind.

2. Vorrichtung nach Anspruch 1 , **dadurch gekennzeichnet,** daß die Montagemittel (13, 14; 23, 24; 9a; 25, 26) durch eine relative Bewegung der Elemente in einer Richtung wirken, die in etwa senkrecht zu einer Achse (Y-Y') der Schraube (2) verläuft.

3. Vorrichtung nach einem der Ansprüche 1 und 2, **dadurch gekennzeichnet,** daß das Kugelgelenk (4) in einem Zwischenbereich der Schraube (2) vorgesehen ist, der sich zwischen einem Betätigungsknopf (5) und dem Außengewinde (3) befindet, und daß der Kugelgelenksitz (19) zwischen zwei Schenkeln (17, 18) des zugehörigen Elements (6) angeordnet ist, die einen Durchgang für die Schraube bilden.

4. Vorrichtung nach Anspruch 3 , **dadurch gekennzeichnet,** daß die Schraube an einem dem Betätigungsknopf (5) gegenüberliegenden Ende ein anderes Betätigungsmittel (12) umfaßt.

5. Vorrichtung nach einem der Ansprüche 3 oder 4, **dadurch gekennzeichnet,** daß das Element (6), das den Kugelgelenksitz bildet, außerdem Mittel mit Verankerungsansätzen (13, 14, 17) in einem speziell ausgeformten Bereich (9a) des zugehörigen Teils (9) umfaßt.

6. Vorrichtung nach einem der Ansprüche 1 bis 5, **dadurch gekennzeichnet,** daß das Innengewinde (22) in einem Element (7) vorgesehen ist, dem die Montagemittel (23, 24, 25, 26) einen Freiheitsgrad als Schwenkbewegung um eine Achse (X-X') verleihen, die in etwa senkrecht zur Achse der Schraube (2) verläuft.

7. Vorrichtung nach Anspruch 6 , **dadurch gekennzeichnet,** daß das Element (7), in dem das Innengewinde (22) vorgesehen ist, zwei Zapfen (23, 24) umfaßt, die in formschlüssige Aufnahmen (25, 26), die in zwei gegenüberliegenden Flächen (27, 28) des zugehörigen Teils (10) vorgesehen sind, über zwei Schrägen (25a, 26a) eingesetzt werden können, die sich nach der Montage in etwa senkrecht zur Achse (Y-Y') der Schraube (2) erstrecken.

8. Kraftfahrzeugscheinwerfer in der Ausführung mit einem beweglichen Teil, etwa einem Reflektor (9), dessen Ausrichtung im Verhältnis zu einem ortsfesten Teil (10), etwa einem Zwischenstück zwischen dem Reflektor und einer Streuscheibe (11) eingestellt werden kann , **dadurch gekennzeichnet,** daß er zwischen dem beweglichen Teil und dem ortsfesten Teil mindestens eine Einstellvorrichtung nach einem der vorangehenden Ansprüche umfaßt.

9. Scheinwerfer nach Anspruch 8 , **dadurch gekennzeichnet,** daß das oder jedes Element (6), das einen Sitz (19) für das Kugelgelenk (4) der Schraube umfaßt, am beweglichen Teil (9) angebracht ist und daß das oder jedes Element (7), das ein Innengewinde (22) für das Außengewinde (3) der Schraube umfaßt, am ortsfesten Teil (10) angebracht ist.

10. Verfahren zur Montage einer Einstellvorrichtung nach einem der Ansprüche 1 bis 7 an einem Scheinwerfer mit einem beweglichen Teil, etwa einem Reflektor (9), dessen Ausrichtung im Verhältnis zu einem ortsfesten Teil (10), etwa einem Zwischenstück zwischen dem Reflektor und einer Streuscheibe (11), eingestellt werden kann , **dadurch gekennzeichnet,** daß es die folgenden Arbeitsgänge umfaßt:
(a) Positionierung des beweglichen Teils (9) und des ortsfesten Teils (10) in einer vorbestimmten wechselseitigen Beziehung,
(b) Vormontage der Schraube (2) mit jedem der beiden Elemente (6, 7),
(c) Montage eines der Elemente (7) am zugehörigen Teil (10) des Scheinwerfers und
(d) Montage des anderen Elements (6) am anderen Teil (9) des Scheinwerfers.

11. Verfahren nach Anspruch 10 , **dadurch gekennzeichnet,** daß die Arbeitsgänge (c) und (d) gleichzeitig erfolgen.

12. Verfahren nach Anspruch 11 , **dadurch gekennzeichnet,** daß die Arbeitsgänge (c) und (d) durch eine Bewegung der Schraube (2) und der beiden vormontierten Elemente (6, 7) entlang einer Richtung erfolgen, die in etwa senkrecht zu einer Achse (Y-Y') der Schraube (2) verläuft.
